# EUROPEAN PATENT APPLICATION

(11) **EP 4 506 318 A1**
(43) Date of publication of application: **12.02.2025**
(21) Application number: 23784589.6
(22) Date of filing: 07.03.2023
(51) Int. Cl.: C03C 25/285, C03C 25/475, C03C 25/48, G02B 6/44

(54) **RESIN COMPOSITION FOR OPTICAL FIBER COATING, COLORED COATING MATERIAL FOR OPTICAL FIBER, OPTICAL FIBER, AND OPTICAL FIBER RIBBON**

(30) Priority: 06.04.2022 JP 2022063430
(71) Applicant: SUMITOMO ELECTRIC INDUSTRIES, LTD., Osaka-shi, Osaka 541-0041 (JP)
(72) Inventor: HAMAKUBO, Katsushi, Osaka-shi, Osaka 541-0041 (JP); IWAGUCHI, Noriaki, Osaka-shi, Osaka 541-0041 (JP); IKEGAWA, Miho, Osaka-shi, Osaka 541-0041 (JP)
(74) Representative: TBK
(86) International application number: PCT/JP2023/008668
(87) International publication number: WO 2023/195296

(57) **Abstract**

A resin composition for optical fiber coating contains a photopolymerizable compound and a photopolymerization initiator, in which the photopolymerizable compound contains epoxy di(meth)acrylate having a bisphenol skeleton and alkylene oxide-modified tri(meth)acrylate, and a content of the alkylene oxide-modified tri(meth)acrylate is 0.5% by mass or more and less than 40% by mass based on the total amount of the photopolymerizable compound.

## Description

### Technical Field

The present disclosure relates to a resin composition for optical fiber coating, a colored coating material for an optical fiber, an optical fiber, and an optical fiber ribbon.

This application claims priority to Japanese Patent Application No. 2022-063430 filed April 6, 2022, the entire content of which is incorporated herein by reference.

### Background Art

An optical fiber has generally a coating resin layer for protecting a glass fiber that is an optical transmission medium. The coating resin layer has, for example, a primary resin layer and a secondary resin layer. An outermost layer of the coating resin layer includes a colored resin layer for identifying the optical fiber (see, for example, Patent Literatures 1 to 3).

### Citation List

### Patent Literature

Patent Literature 1: JP H6-242355 A
Patent Literature 2: JP 2003-279811 A
Patent Literature 3: WO 2016/047002 A1

### Summary of Invention

A resin composition for optical fiber coating according to one aspect of the present disclosure contains a photopolymerizable compound and a photopolymerization initiator, in which the photopolymerizable compound contains epoxy di(meth)acrylate having a bisphenol skeleton and alkylene oxide-modified tri(meth)acrylate, and a content of the alkylene oxide-modified tri(meth)acrylate is 0.5% by mass or more and less than 40% by mass based on the total amount of the photopolymerizable compound.

### Brief Description of Drawings

[FIG. 1] FIG. 1 is a schematic cross-sectional view illustrating an example of an optical fiber according to the present embodiment.
[FIG. 2] FIG. 2 is a schematic cross-sectional view illustrating an example of an optical fiber according to the present embodiment.
[FIG. 3] FIG. 3 is a schematic cross-sectional view illustrating an example of an optical fiber ribbon according to the present embodiment.

### Description of Embodiments

### [Problems to be solved by the present disclosure]

An optical fiber may be used in the form of an optical fiber ribbon including a plurality of optical fibers arranged and collectively integrated with a resin for a ribbon. In an optical fiber ribbon using an optical fiber having a colored resin layer, when an operation of taking out the optical fiber by removing a ribbon material is performed, a phenomenon that the colored resin layer is peeled from the optical fiber, that is, so-called "color peeling" may occur. In particular, when the linear speed is increased at the time of forming a colored resin layer, color peeling is likely to occur. Furthermore, in the case of immersing the optical fiber in hot water, the coating resin layer is peeled from the glass fiber to increase transmission loss in some cases.

An object of the present disclosure is to provide a resin composition by which an optical fiber in which color peeling is less likely to occur and which is excellent in hot water resistance can be produced, a colored coating material for an optical fiber, an optical fiber, and an optical fiber ribbon.

### [Effects of the present disclosure]

According to the present disclosure, it is possible to provide a resin composition by which an optical fiber in which color peeling is less likely to occur and which is excellent in hot water resistance can be produced, a colored coating material for an optical fiber, an optical fiber, and an optical fiber ribbon.

### [Description of embodiments of the present disclosure]

First, the contents of embodiments of the present disclosure will be listed and described.
(1) A resin composition for optical fiber coating according to one aspect of the present disclosure contains a photopolymerizable compound and a photopolymerization initiator, in which the photopolymerizable compound contains epoxy di(meth)acrylate having a bisphenol skeleton and alkylene oxide-modified tri(meth)acrylate, and a content of the alkylene oxide-modified tri(meth)acrylate is 0.5% by mass or more and less than 40% by mass based on the total amount of the photopolymerizable compound.
   Such a resin composition uses, as a photopolymerizable compound, a (meth)acrylate compound having a specific structure instead of urethane (meth)acrylate commonly used, so that an optical fiber in which color peeling is less likely to occur and which is excellent in hot water resistance can be produced.
(2) In the above (1), from the viewpoint of adjusting a Young's modulus of the resin layer, the alkylene oxide-modified di(meth)acrylate may have at least one selected from the group consisting of an ethylene oxide chain and a propylene oxide chain.
(3) In the above (1) or (2), from the viewpoint of coloring the resin layer, the resin composition according to the present embodiment may further contain titanium oxide.
(4) A colored coating material for an optical fiber according to one aspect of the present disclosure contains the resin composition described in any one of the above (1) to (3). By using the resin composition according to the present embodiment in the colored resin layer, an optical fiber in which color peeling is less likely to occur and which is excellent in hot water resistance can be produced.
(5) An optical fiber according to an aspect of the present disclosure includes a glass fiber including a core and a cladding, a primary resin layer being in contact with the glass fiber and coating the glass fiber, a secondary resin layer coating the primary resin layer, and a colored resin layer coating the secondary resin layer, in which the colored resin layer contains a cured product of the resin composition described in any one of the above (1) to (3). By applying the resin composition according to the present embodiment to the colored resin layer, the hot water resistance of the optical fiber can be improved without color peeling.
(6) An optical fiber according to an aspect of the present disclosure includes a glass fiber including a core and a cladding, a primary resin layer being in contact with the glass fiber and coating the glass fiber, and a secondary resin layer coating the primary resin layer, in which the secondary resin layer contains a cured product of the resin composition described in any one of the above (1) to (3). By applying the resin composition according to the present embodiment to the secondary resin layer, the hot water resistance of the optical fiber can be improved without color peeling.
(7) An optical fiber ribbon according to an aspect of the present disclosure in which a plurality of optical fibers described in the above (5) or (6) are arranged in parallel and coated with a resin for a ribbon. Such an optical fiber ribbon is excellent in hot water resistance, when an operation of taking out the optical fiber is performed, color peeling does not occur, and the optical fiber can be easily identified.

### [Details of embodiments of the present disclosure]

Specific examples of the resin composition and the optical fiber according to embodiments of the present disclosure will be described with reference to the drawings as necessary. Note that, the present disclosure is not limited to these illustrations but is indicated by the claims and intended to include meanings equivalent to the claims and all modifications within the claims. In the following description, the same reference numerals are given to the same elements in the description of the drawing, and redundant description will be omitted. In the present specification, (meth)acrylate means an acrylate or its corresponding methacrylate. The same applies to other similar expressions such as (meth)acryloyl.

### (Resin composition)

A resin composition for optical fiber coating according to the present embodiment contains a photopolymerizable compound and a photopolymerization initiator, in which the photopolymerizable compound contains epoxy di(meth)acrylate having a bisphenol skeleton and alkylene oxide-modified tri(meth)acrylate, and a content of the alkylene oxide-modified tri(meth)acrylate is 0.5% by mass or more and less than 40% by mass based on the total amount of the photopolymerizable compound.

From the viewpoint of further suppressing color peeling, the content of the alkylene oxide-modified tri(meth)acrylate may be 0.8% by mass or more, 1% by mass or more, 2% by mass or more, or 4% by mass or more. From the viewpoint of further improving hot water resistance, the content of the alkylene oxide-modified tri(meth)acrylate may be 36% by mass or less, 34% by mass or less, 32% by mass or less, or 30% by mass or less.

The alkylene oxide-modified tri(meth)acrylate according to the present embodiment may have at least one selected from the group consisting of an ethylene oxide (EO) chain and a propylene oxide (PO) chain, from the viewpoint of adjusting the Young's modulus of the resin layer. The ethylene oxide chain can be expressed as "(EO)n" and the propylene oxide chain can be expressed as "(PO)n". n is an integer of 1 or more, may be 2 or more, 3 or more, 6 or more, 8 or more, or 10 or more, and may be 30 or less, 25 or less, 20 or less, 18 or less, or 16 or less. The number of alkylene oxides that the alkylene oxide-modified tri(meth)acrylate has may be 3 to 21, 3 to 18, or 3 to 15.

Examples of the alkylene oxide-modified tri(meth)acrylate include trimethylolpropane tri(meth)acrylate, trimethyloloctane tri(meth)acrylate, trimethylolpropane polyethoxy tri(meth)acrylate, trimethylolpropane polypropoxy tri(meth)acrylate, trimethylolpropane polyethoxy polypropoxy tri(meth)acrylate, tris[(meth)acryloyloxyethyl]isocyanurate, and pentaerythritol tri(meth)acrylate. From the viewpoint of further suppressing color peeling, the alkylene oxide-modified tri(meth)acrylate according to the present embodiment may be trimethylolpropane polyethoxy tri(meth)acrylate (trimethylolpropane EO-added triacrylate).

As the epoxy (dimeth)acrylate according to the present embodiment, a reaction product of a diglycidyl ether compound having a bisphenol skeleton and a compound having a (meth)acryloyl group such as (meth)acrylic acid can be used.

Examples of the epoxy di(meth)acrylate include a (meth)acrylic acid adduct of bisphenol A diglycidyl ether, a (meth)acrylic acid adduct of bisphenol AF diglycidyl ether, and a (meth)acrylic acid adduct of bisphenol F diglycidyl ether.

From the viewpoint of increasing the strength of the resin layer, the content of the epoxy di(meth)acrylate may be 30% by mass or more, 40% by mass or more, or 45% by mass or more, and may be 75% by mass or less, 70% by mass or less, 65% by mass or less, 60% by mass or less, or 55% by mass or less, based on the total amount of the photopolymerizable compound.

From the viewpoint of enhancing the toughness of the resin layer, the photopolymerizable compound according to the present embodiment may further contain an alkylene-modified di(meth)acrylate having a bisphenol skeleton. Examples of the alkylene-modified di(meth)acrylate having a bisphenol skeleton include EO-modified di(meth)acrylate of bisphenol A, PO-modified di(meth)acrylate of bisphenol A, and EO/PO-modified di(meth)acrylate of bisphenol A.

The photopolymerizable compound according to the present embodiment can further contain a photopolymerizable compound (hereinafter, referred to as "monomer") other than the epoxy di(meth)acrylate having a bisphenol skeleton, the alkylene oxide-modified tri(meth)acrylate, and the alkylene-modified di(meth)acrylate having a bisphenol skeleton.

As the monomer, a monofunctional monomer having one polymerizable group and a polyfunctional monomer having two or more polymerizable groups can be used. The monomer may be used as a mixture of two or more kinds thereof.

Examples of the monofunctional monomer include (meth)acrylate-based monomers such as methyl (meth)acrylate, ethyl (meth)acrylate, propyl (meth)acrylate, n-butyl (meth)acrylate, s-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 2-phenoxyethyl (meth)acrylate, 3-phenoxy benzyl acrylate, phenoxy diethyleneglycol acrylate, phenoxy polyethylene glycol acrylate, 4-tert-butylcyclohexanol acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, nonylphenoxypolyethylene glycol (meth)acrylate, and isobornyl (meth)acrylate; carboxy group-containing monomers such as (meth)acrylic acid, a (meth)acrylic acid dimer, carboxyethyl (meth)acrylate, carboxypentyl (meth)acrylate, and ω-carboxy-polycaprolactone (meth)acrylate; heterocycle-containing monomers such as N-(meth)acryloylmorpholine, N-vinylpyrrolidone, N-vinylcaprolactam, N-(meth)acryloylpiperidine, N-(meth)acryloylpyrrolidine, 3-(3-pyridine)propyl (meth)acrylate, and cyclic trimethylolpropane formal acrylate; maleimide-based monomers such as maleimide, N-cyclohexylmaleimide, and N-phenylmaleimide; amide-based monomers such as (meth)acrylamide, N,N-dimethyl (meth)acrylamide, N,N-diethyl (meth)acrylamide, N-hexyl (meth)acrylamide, N-methyl (meth)acrylamide, N-ethyl (meth)acrylamide, N-butyl (meth)acrylamide, N-methylol (meth)acrylamide, and N-methylolpropane (meth)acrylamide; aminoalkyl (meth)acrylate-based monomers such as aminoethyl (meth)acrylate, aminopropyl (meth)acrylate, N,N-dimethylaminoethyl (meth)acrylate, and tert-butylaminoethyl (meth)acrylate; and succinimide-based monomers such as N-(meth)acryloyloxymethylene succinimide, N-(meth)acryloyl-6-oxyhexamethylene succinimide, and N-(meth)acryloyl-8-oxyoctamethylene succinimide.

Examples of the polyfunctional monomer include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyldiol di(meth)acrylate, 3-ethyl-1,8-octanediol di(meth)acrylate, pentaerythritol polyethoxy tetra(meth)acrylate, pentaerythritol polypropoxy tetra(meth)acrylate, pentaerythritol tetra(meth)acrylate, ditrimethylolpropane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl]isocyanurate.

The photopolymerization initiator can be appropriately selected from known radical photopolymerization initiators for use. Examples of the photopolymerization initiator include 1-hydroxycyclohexyl phenyl ketone (Omnirad 184, manufactured by IGM Resins), 2,2-dimethoxy-2-phenylacetophenone, 1-(4-isopropylphenyl)-2-hydroxy-2-methylpropane-1-one, bis(2,6-dimethoxybenzoyl)-2,4,4-trimethylpentylphosphine oxide, 2-methyl-1-[4-(methylthio)phenyl]-2-morpholino-propane-1-one (Omnirad 907, manufactured by IGM Resins), 2,4,6-trimethylbenzoyl diphenylphosphine oxide (Omnirad TPO, manufactured by IGM Resins), and bis(2,4,6-trimethylbenzoyl)phenylphosphine oxide (Omnirad 819, manufactured by IGM Resins).

The content of the photopolymerization initiator may be 1 part by mass or more and 10 parts by mass or less, 2 parts by mass or more and 8 parts by mass or less, or 3 parts by mass or more and 7 parts by mass or less, with respect to 100 parts by mass of the total amount of the photopolymerizable compound.

The resin composition may further contain a silane coupling agent, a leveling agent, an antifoaming agent, an antioxidant, a sensitizer, and the like.

The silane coupling agent is not particularly limited as long as it causes no inhibition in curing of the resin composition. Examples of the silane coupling agent include tetramethyl silicate, tetraethyl silicate, mercaptopropyl trimethoxysilane, vinyltrichlorosilane, vinyltriethoxysilane, vinyltris(β-methoxy-ethoxy)silane, β-(3,4-epoxylcyclohexyl)-ethyltrimethoxysilane, dimethoxydimethylsilane, diethoxydimethylsilane, 3-acryloxypropyl trimethoxysilane, γ-glycidoxypropyl trimethoxysilane, γ-glycidoxypropylmethyl diethoxysilane, γ-methacryloxypropyl trimethoxysilane, N-(β-aminoethyl)-γ-aminopropyl trimethoxysilane, N-(β-aminoethyl)-γ-aminopropyltrimethyl dimethoxysilane, N-phenyl-γ-aminopropyl trimethoxysilane, γ-chloropropyl trimethoxysilane, γ-mercaptopropyl trimethoxysilane, γ-aminopropyl trimethoxysilane, bis-[3-(triethoxysilyl)propyl]tetrasulfide, bis-[3-(triethoxysilyl)propyl]disulfide, γ-trimethoxysilylpropyl dimethylthiocarbamyl tetrasulfide, and γ-trimethoxysilylpropyl benzothiazyl tetrasulfide.

From the viewpoint of coloring the resin layer, the resin composition according to the present embodiment can further contain titanium oxide particles. As the titanium oxide particles, surface-treated titanium oxide particles may be used. The surface-treated titanium oxide particles are particles in which titanium oxide is surface-treated with an inorganic substance, and have excellent dispersibility in the resin composition.

Examples of the inorganic substance used for the surface treatment include aluminum oxide, silicon dioxide, and zirconium dioxide. When the surface-treated titanium oxide particles have a surface-treated layer containing at least one selected from the group consisting of aluminum oxide, silicon dioxide, and zirconium dioxide, dispersibility can be further improved. The surface-treated layer may be formed on at least a portion of the surface of titanium oxide, and may be formed on the entire surface of titanium oxide. The surface-treated layer is formed by the surface treatment of titanium oxide.

The amount of the surface-treated layer in the surface-treated titanium oxide particles may be 1% by mass or more, 1.5% by mass or more, or 2% by mass or more from the viewpoint of improving dispersibility, and may be 10% by mass or less, 9% by mass or less, or 8% by mass or less from the viewpoint of increasing hiding power. The amount of the surface-treated layer can be calculated by measuring the amount of the titanium element and an inorganic element other than titanium contained in the surface-treated titanium oxide particles using inductively coupled mass spectrometry (ICP-MS).

From the viewpoint of improving the lateral pressure resistance of the coating resin layer, the average primary particle diameter of the surface-treated titanium oxide particles may be 300 nm or less, 295 nm or less, or 290 nm or less. From the viewpoint of increasing hiding power, the average primary particle diameter of the surface-treated titanium oxide particles may be 100 nm or more, 150 nm or more, or 200 nm or more, and may be 200 nm or more and 300 nm or less. The average primary particle diameter can be measured, for example, by image analysis of electron micrographs, a light scattering method, a BET method, or the like.

From the viewpoint of improving the visibility of the resin layer, the content of the surface-treated titanium oxide particles may be 0.6% by mass or more, 1% by mass or more, 2% by mass or more, or 3% by mass or more, based on the total amount of the resin composition. From the viewpoint of enhancing the curability of the resin composition, the content of the surface-treated titanium oxide particles may be 20% by mass or less, 15% by mass or less, 10% by mass or less, or 8% by mass or less, based on the total amount of the resin composition.

When the breaking elongation of a resin film obtained by curing the resin composition according to the present embodiment with an integrated light amount of 900 mJ/cm² or more and 1100 mJ/cm² or less is 6% or more and 50% or less at 23°C, a resin layer excellent in toughness can be formed. The breaking elongation of the resin film may be 6.5% or more, 7% or more, or 10% or more, and may be 45% or less, 40% or less, or 30% or less.

From the viewpoint of improving the hot water resistance of the optical fiber, the Young's modulus of the resin film may be 1000 MPa or more, 1100 MPa or more, or 1150 MPa or more at 23°C. From the viewpoint of forming a resin layer excellent in toughness, the Young's modulus of the resin film may be 2000 MPa or less, 1900 MPa or less, or 1800 MPa or less at 23°C.

The resin composition according to the present embodiment can be suitably used as a colored coating material for an optical fiber. By forming an outermost layer of the coating resin layer using the colored coating material containing the resin composition according to the present embodiment, the hot water resistance of the optical fiber can be improved.

### (Optical fiber)

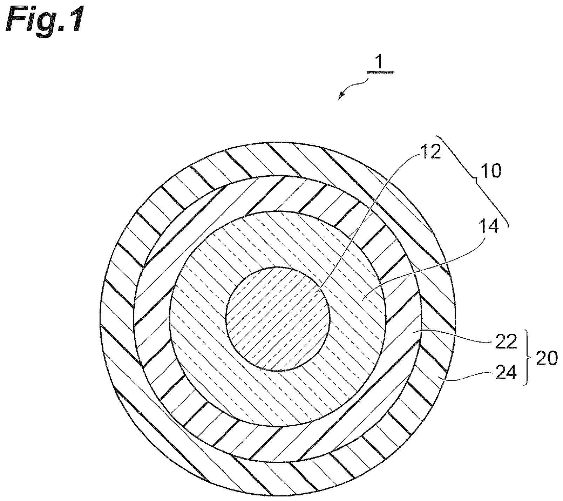

FIG. 1 is a schematic cross-sectional view illustrating a configuration of an optical fiber according to an embodiment. As illustrated in FIG. 1, an optical fiber 1 of the present embodiment includes a glass fiber 10 and a coating resin layer 20 being in contact with the glass fiber 10 and covering an outer periphery of the glass fiber 10.

The glass fiber 10 is a light guiding optical transmission medium that transmits light introduced to the optical fiber 1. The glass fiber 10 is a member made of glass, and is configured, for example, with silica (SiO₂) glass as a base material (main component). The glass fiber 10 includes a core 12 and a cladding 14 covering the core 12. The glass fiber 10 transmits light introduced to the optical fiber 1. The core 12 is provided, for example, in an area including a center axis line of the glass fiber 10. The core 12 is made of, for example, pure SiO₂ glass, or SiO₂ glass containing GeO₂ and/or a fluorine element, or the like. The cladding 14 is provided in an area surrounding the core 12. The cladding 14 has a refractive index lower than a refractive index of the core 12. The cladding 14 is made of, for example, pure SiO₂ glass, or SiO₂ glass added with a fluorine element. The outer diameter of the glass fiber 10 is about 100 to 125 µm, and the diameter of the core 12 constituting the glass fiber 10 is about 7 to 15 µm.

The coating resin layer 20 is an ultraviolet curable resin layer covering the cladding 14. The coating resin layer 20 includes a primary resin layer 22 coating an outer periphery of the glass fiber 10, and a secondary resin layer 24 coating an outer periphery of the primary resin layer 22. The primary resin layer 22 is in contact with an outer peripheral surface of the cladding 14 and coats the entire cladding 14. The secondary resin layer 24 is in contact with an outer peripheral surface of the primary resin layer 22 and coats the entire primary resin layer 22. The thickness of the primary resin layer 22 is, for example, 10 µm or more and 50 µm or less. The thickness of the secondary resin layer 24 is, for example, 10 µm or more and 40 µm or less.

The resin composition according to the present embodiment can be applied to the secondary resin layer 24. The secondary resin layer 24 can be formed by curing the above-described resin composition. When the secondary resin layer 24 contains a cured product of the resin composition according to the present embodiment, the single fiber separability and the hot water resistance of the optical fiber can be improved without color peeling.

The primary resin layer 22 can be formed, for example, by curing a resin composition containing urethane (meth)acrylate, a monomer, a photopolymerization initiator, and a silane coupling agent. For the resin composition for a primary resin layer, conventionally known techniques can be used.

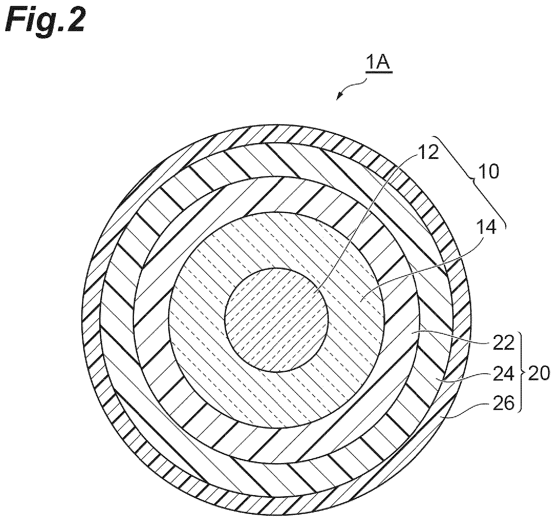

The coating resin layer 20 may further include a colored resin layer 26 coating an outer periphery of the secondary resin layer 24. FIG. 2 is a schematic cross-sectional view illustrating a configuration of an optical fiber according to an embodiment. As illustrated in FIG. 2, an optical fiber 1A of the present embodiment includes a glass fiber 10 and a coating resin layer 20 being in contact with the glass fiber 10 and covering an outer periphery of the glass fiber 10. The coating resin layer 20 includes a primary resin layer 22, a secondary resin layer 24, and a colored resin layer 26. The thickness of the colored resin layer 26 is, for example, 3 µm or more and 10 µm or less.

The resin composition according to the present embodiment can be applied to the colored resin layer 26. The colored resin layer 26 can be formed by curing the above-described resin composition. When the colored resin layer 26 contains a cured product of the resin composition according to the present embodiment, the single fiber separability and the hot water resistance of the optical fiber can be improved without color peeling. The secondary resin layer 24 in the optical fiber 1A may be formed using a conventionally known resin composition, and can be formed, for example, by curing a resin composition containing urethane (meth)acrylate, a monomer, and a photopolymerization initiator.

### (Optical fiber ribbon)

An optical fiber ribbon using the optical fiber according to the present embodiment can be produced. In the optical fiber ribbon, a plurality of the above-described optical fibers are arranged in parallel and coated with a resin for a ribbon.

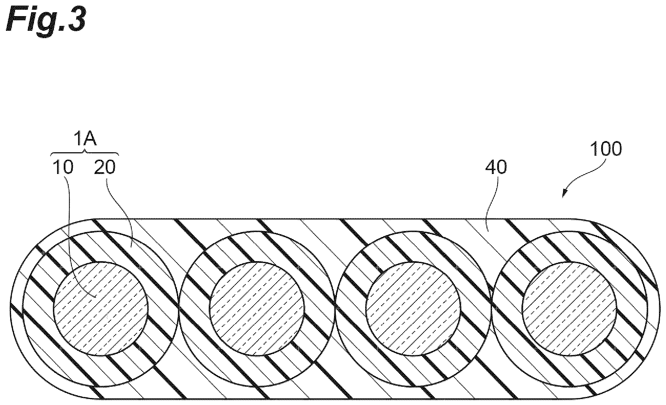

FIG. 3 is a schematic cross-sectional view illustrating an optical fiber ribbon according to the present embodiment. An optical fiber ribbon 100 includes a plurality of optical fibers 1A, and a connecting resin layer 40 in which the optical fibers 1A are coated with a resin for a ribbon and connected. In FIG. 3, as an example, four optical fibers are illustrated, but the number thereof is not particularly limited.

As the resin for a ribbon, a resin material generally known as a ribbon material can be used. From the viewpoint of damage preventing property, dividing easiness, and the like of the optical fiber, the resin for a ribbon may include a thermosetting resin such as a silicone resin, an epoxy resin, or a urethane resin, or an ultraviolet curable resin such as epoxy acrylate, urethane acrylate, or polyester acrylate.

By the optical fiber ribbon according to the present embodiment using the above-described optical fiber, when an operation of taking out the optical fiber by removing the connecting resin layer from the optical fiber ribbon, color peeling does not occur, and the optical fiber can be easily identified.

### Examples

The following will describe the present disclosure in further detail with showing results of evaluation tests using Examples and Comparative Examples according to the present disclosure. Note that, the present invention is not limited to these Examples.

### [Resin composition for colored resin layer]

### (Photopolymerizable compound)

As a photopolymerizable compound, bisphenol A epoxy diacrylate (EA) and the following alkylene oxide-modified acrylate compounds were prepared.
BPA(EO)₄DA: EO-modified bisphenol A di(meth)acrylate (EO number: 4)
TMP(EO)₃TA: trimethylolpropane EO-added triacrylate (EO number: 3)
TMP(EO)₆TA: trimethylolpropane EO-added triacrylate (EO number: 6)
TMP(EO)₉TA: trimethylolpropane EO-added triacrylate (EO number: 9)
TMP(EO)₁₅TA: trimethylolpropane EO-added triacrylate (EO number: 15)
PE(EO)nTTA: ethoxylated pentaerythritol tetraacrylate (EO number: 5)

As a photopolymerization initiator, 2,4,6-trimethylbenzoyl diphenylphosphine oxide (Omnirad TPO) and 1-hydroxycyclohexyl phenyl ketone (Omnirad 184) were prepared.

As titanium oxide particles, surface-treated titanium oxide particles having a surface-treated layer containing aluminum oxide (Al₂O₃) were prepared. The average primary particle diameter of the surface-treated titanium oxide particles was 200 to 300 nm, and the amount of Al₂O₃ calculated by ICP-MS measurement was 2.5% by mass.

After mixing the photopolymerizable compound and the photopolymerization initiator in the blending amount (parts by mass) shown in Table 1, mixing was performed so that the content of surface-treated titanium oxide particles in the resin composition was 5% by mass, thereby preparing a resin composition. Test Examples 1 to 9 correspond to Examples, and Test Examples 10 and 11 correspond to Comparative Examples.

### (Young's modulus)

A resin composition was applied onto a polyethylene terephthalate (PET) film using a spin coater, and then cured using an electrodeless UV lamp system ("VPS600 (D valve)" manufactured by Heraeus K. K.) under the conditions of 1000 ± 100 mJ/cm² to form a resin layer having a thickness of 50 ± 5 µm on the PET film. The resin layer was peeled from the PET film to obtain a resin film.

The resin film was punched into a dumbbell shape of JIS K 7127 Type 5, and pulled under the conditions of 23 ± 2°C and 50 ± 10% RH using a tensile tester at a tension rate of 1 mm/min and a gauge line distance of 25 mm to obtain a stress-strain curve. The Young's modulus was determined from 2.5% secant line.

### (Resin composition for primary resin layer)

A urethane acrylate oligomer obtained by reacting polypropylene glycol having a molecular weight of 4000, isophorone diisocyanate, hydroxyethyl acrylate, and methanol was prepared. 75 parts by mass of this urethane acrylate oligomer, 12 parts by mass of nonylphenol EO-modified acrylate, 6 parts by mass of N-vinylcaprolactam, 2 parts by mass of 1,6-hexanediol diacrylate, 1 part by mass of Omnirad TPO, and 1 part by mass of 3-mercaptopropyl trimethoxysilane were mixed to prepare a resin composition P.

### (Resin composition for secondary resin layer)

40 parts by mass of urethane acrylate oligomer, which is a reaction product of polypropylene glycol having a molecular weight of 600, 2,4-tolylene diisocyanate, and 2-hydroxyethyl acrylate, 35 parts by mass of isobornyl acrylate, 24 parts by mass of epoxy acrylate, which is an acrylic acid adduct of bisphenol A diglycidyl ether, 1 part by mass of Omnirad TPO, and 1 part by mass of Omnirad 184 were mixed to prepare a resin composition S.

### (Resin composition for ribbon)

18 parts by mass of urethane acrylate, which is a reaction product of bisphenol A-ethylene oxide addition diol, tolylene diisocyanate, and hydroxyethyl acrylate, 10 parts by mass of urethane acrylate, which is a reaction product of polytetramethylene glycol, tolylene diisocyanate, and hydroxyethyl acrylate, 15 parts by mass of tricyclodecanedimethanol diacrylate, 10 parts by mass of N-vinylpyrrolidone, 10 parts by mass of isobornyl acrylate, 5 parts by mass of bisphenol A-ethylene oxide addition diol diacrylate, 0.7 parts by mass of 2-methyl-1-[4-(methylthio)phenyl]-2-morpholino-propane-1-one (Omnirad 907), and 1.3 parts by mass of Omnirad TPO were mixed to prepare a resin composition R.

### [Production of optical fiber]

A primary resin layer having a thickness of 17.5 µm was formed using the resin composition P on the outer periphery of the glass fiber having a diameter of 125 µm and composed of a core and a cladding, and a secondary resin layer having a thickness of 15 µm was further formed using the resin composition S on the outer periphery thereof, thereby producing an optical fiber. Next, after temporarily winding the optical fiber, a colored resin layer having a thickness of 5 µm was formed using the resin composition of each of Test Examples 1 to 11 on the outer periphery of the secondary resin layer while feeding out the optical fiber again by a coloring machine, thereby producing an optical fiber (hereinafter, referred to as "colored optical fiber") having a diameter of 200 µm and having the colored resin layer. The linear speed at the time of forming each resin layer was set to 1500 m/min.

### [Production of optical fiber ribbon]

Four colored optical fibers were prepared, the resin composition R for a ribbon was coated, and the resin composition was then cured by irradiation with ultraviolet rays to form a connecting resin layer, thereby producing an optical fiber ribbon.

### (Hot water test)

After measuring the transmission loss of the optical fiber ribbon, the optical fiber ribbon was immersed in hot water at 60°C for 60 days. The transmission loss at a wavelength of 1.55 µm was measured before immersion in hot water of the optical fiber ribbon and after 30 days of immersion by the OTDR method. A case where a difference between the transmission loss before immersion in hot water and the transmission loss after immersion in hot water for 60 days was 0.05 dB/km or less was evaluated as "A", and a case where the difference was more than 0.05 dB/km was evaluated as "B".

### (Color peeling test)

The optical fiber ribbon was stored in an environment (dark place) at 85°C and 85% RH for 30 days, and then the optical fibers were separated into individual optical fibers from the optical fiber ribbon in accordance with Telcordia GR-20 5.3.1. The presence and absence of peeling of the colored resin layer at this time was evaluated. A case where there was no peeling of the colored resin layer was evaluated as "A", and a case where there was peeling of the colored resin layer was evaluated as "B".

**[Table 1]**

| Test Example | 1 | 2 | 3 | 4 | 5 | 6 | 7 | 8 | 9 | 10 | 11 |
|---|---|---|---|---|---|---|---|---|---|---|---|
| EA | 50 | 50 | 50 | 50 | 50 | 70 | 70 | 70 | 70 | 50 | 50 |
| BPA(EO)₄DA | 49 | 45 | 40 | 30 | 20 | 20 | 20 | 20 | 10 | - | 50 |
| TMP(EO)₃TA | - | - | - | - | - | 10 | - | - | 20 | - | - |
| TMP(EO)₆TA | - | - | - | - | - | - | 10 | - | - | - | - |
| TMP(EO)₉TA | - | - | - | - | - | - | - | 10 | - | - | - |
| TNW(EO)₁₅TA | 1 | 5 | 10 | 20 | 30 | - | - | - | - | 40 | - |
| PE(EO)nTTA | - | - | - | - | - | - | - | - | - | 10 | - |
| Omnirad 184 | 5 | 5 | 5 | 5 | 5 | 5 | 5 | 5 | 5 | 5 | 5 |
| Omnirad TPO | 1 | 1 | 1 | 1 | 1 | 1 | 1 | 1 | 1 | 1 | 1 |
| TiO₂ (% by mass) | 5 | 5 | 5 | 5 | 5 | 5 | 5 | 5 | 5 | 5 | 5 |
| Young's modulus (MPa) | 1500 | 1450 | 1400 | 1300 | 1200 | 1600 | 1500 | 1450 | 1700 | 950 | 1450 |
| Hot water test | A | A | A | A | A | A | A | A | A | B | A |
| Color peeling test | A | A | A | A | A | A | A | A | A | A | B |

### Reference Signs List

1, 1A: optical fiber
10: glass fiber
12: core
14: cladding
20: coating resin layer
22: primary resin layer
24: secondary resin layer
26: colored resin layer
40: connecting resin layer
100: optical fiber ribbon

## Claims

1. A resin composition for optical fiber coating, the resin composition comprising a photopolymerizable compound and a photopolymerization initiator,
wherein the photopolymerizable compound contains epoxy di(meth)acrylate having a bisphenol skeleton and alkylene oxide-modified tri(meth)acrylate, and
a content of the alkylene oxide-modified tri(meth)acrylate is 0.5% by mass or more and less than 40% by mass based on the total amount of the photopolymerizable compound.

2. The resin composition according to claim 1, wherein the alkylene oxide-modified tri(meth)acrylate has at least one selected from the group consisting of an ethylene oxide chain and a propylene oxide chain.

3. The resin composition according to claim 1, further comprising titanium oxide.

4. A colored coating material for an optical fiber, the colored coating material comprising the resin composition according to any one of claims 1 to 3.

5. An optical fiber comprising:
a glass fiber including a core and a cladding;
a primary resin layer being in contact with the glass fiber and coating the glass fiber;
a secondary resin layer coating the primary resin layer; and
a colored resin layer coating the secondary resin layer,
wherein the colored resin layer contains a cured product of the resin composition according to any one of claims 1 to 3.

6. An optical fiber comprising:
a glass fiber including a core and a cladding;
a primary resin layer being in contact with the glass fiber and coating the glass fiber; and
a secondary resin layer coating the primary resin layer,
wherein the secondary resin layer contains a cured product of the resin composition according to any one of claims 1 to 3.

7. An optical fiber ribbon in which a plurality of optical fibers according to claim 5 are arranged in parallel and coated with a resin for a ribbon.

8. An optical fiber ribbon in which a plurality of optical fibers according to claim 6 are arranged in parallel and coated with a resin for a ribbon.
